# EUROPÄISCHE PATENTANMELDUNG

(11) **EP 1 260 433 A2**
(43) Veröffentlichungstag der Anmeldung: **27.11.2002**
(21) Anmeldenummer: 02006321.0
(22) Anmeldetag: 21.03.2002
(51) Int. Cl.: B64D 11/00, B60N 3/00, B64D 11/06

(54) **Klapptisch für Sitze in Flug- oder Fahrzeugen**

(30) Priorität: 23.05.2001 DE 20108619 U; 16.08.2001 DE 20113534 U
(71) Anmelder: Bader, Thomas, 50670 Köln (DE)
(72) Erfinder: Bader, Thomas, 50670 Köln (DE)
(74) Vertreter: Gustorf, Gerhard, Dipl.-Ing.

(57) **Zusammenfassung**

Der Klapptisch hat eine Scharniereinrichtung (18) zur um etwa 90° schwenkbaren Befestigung an einem vertikalen Träger, insbesondere an der Rückseite (14) der Rückenlehne (10) eines Flugzeugsitzes (12) oder Fahrzeugsitzes. Der Klapptisch (16) hat die Form einer Platte mit in horizontaler Gebrauchsstellung nach oben weisender Nutzfläche (20) und parallel dazu verlaufender Unterseite (22), welche in der hochgeklappten Ruhestellung des Tisches als vertikale Fläche sichtbar ist und eine Aussparung (26) zur Aufnahme eines plattenförmigen Einsatzes (30) für einen Informationsträger (36) aufweist. Der plattenförmige Einsatz (30) besteht aus einem elastisch verformbaren, durchsichtigen Kunststoff und greift mit wenigstens zwei gegenüberliegenden Rändern form- und/oder kraftschlüssig in Sitze (32) an den gegenüberliegenden Rändern der Aussparung (26) herausnehmbar ein.

## Beschreibung

Die Erfindung betrifft einen Klapptisch nach dem Oberbegriff des Patentanspruchs 1, der vor allem an der Rückseite der Rückenlehne von Flugzeug- oder Fahrzeugsitzen schwenkbar befestigt werden kann.

Ein derartiger Klappsitz ist in dem deutschen Gebrauchsmuster 299 07 135 des Anmelders beschrieben und dargestellt. Die in der hochgeklappten Ruhestellung des Tisches vertikale Sichtfläche ist hierbei an einem plattenförmigen Einsatz ausgebildet, der in einer Aussparung an der Unterseite der Tischplatte herausnehmbar gelagert ist und ein Einlegefach zur Aufnahme eines blattförmigen Informationsträgers hat. In der hochgeklappten Ruhestellung des Tisches ist dieser Informationsträger somit ständig sichtbar, so daß der Fluggast oder Fahrgast über längere Zeit nicht umhinkommt, die Information zur Kenntnis zu nehmen. Als Informationsträger eignet sich somit in erster Linie Werbematerial über Produkte oder Dienstleistungen.

Der Erfindung liegt die Aufgabe zugrunde, den Klapptisch der im Oberbegriff des Patentanspruchs 1 angegebenen Gattung so weiterzuentwickeln, daß bei einer wesentlichen Vereinfachung der Konstruktion der Einsatz für den Wechsel des Informationsträgers einfach und in Sekundenschnelle herausgenommen und so wieder eingelegt werden kann, daß er von Unbefugten nicht entfernt werden kann.

Die Lösung dieser Aufgabe ergibt sich aus dem kennzeichnenden Teil des Patentanspruchs 1. Vorteilhafte Weiterbildungen sind Gegenstand der Unteransprüche.

Die Erfindung ist nachstehend an Ausführungsbeispielen erläutert, die in der Zeichnung dargestellt sind. Es zeigen:
Figur 1 die perspektivische Ansicht eines Flugzeugsitzes mit einem gemäß der Erfindung ausgebildeten Klapptisch,
Figur 2 die vergrößerte Rückansicht des Sitzes, wobei das Auswechseln des Informationsträgers angedeutet ist,
Figur 3 die schematische Ansicht der Sichtseite eines Klapptisches,
Figur 4 eine vergrößerte Schnittdarstellung in der Ebene IV-IV der Figur 3,
Figur 5 eine ebenfalls vergrößerte Schnittdarstellung in der Ebene V-V der Figur 3,
Figur 6 eine Variante der Figur 3,
Figur 7 eine Schnittdarstellung in der Ebene VII-VII der Figur 6 beim Einschieben eines Einsatzes,
Figur 8 eine vergrößerte Teildarstellung in der Schnittebene VIII der Figur 7,
Figur 9 eine Variante der Figur 7,
Figur 10 eine vergrößerte Detaildarstellung der Figur 9 nach dem Anbringen des Einsatzes,
Figur 11 eine weitere Variante der Figur 7 und
Figur 12 eine der Figur 10 entsprechende Detaildarstellung der Variante der Figur 11.

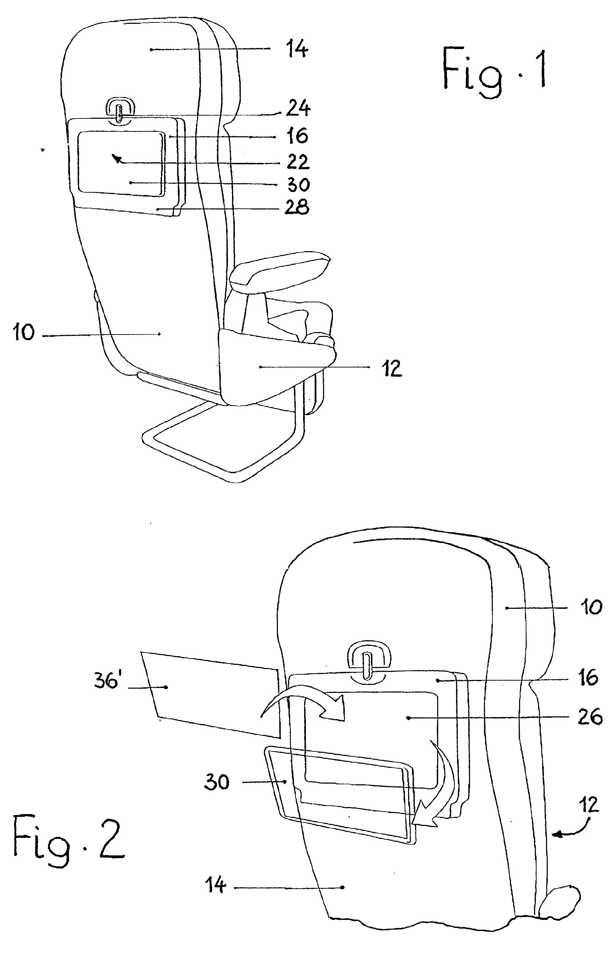

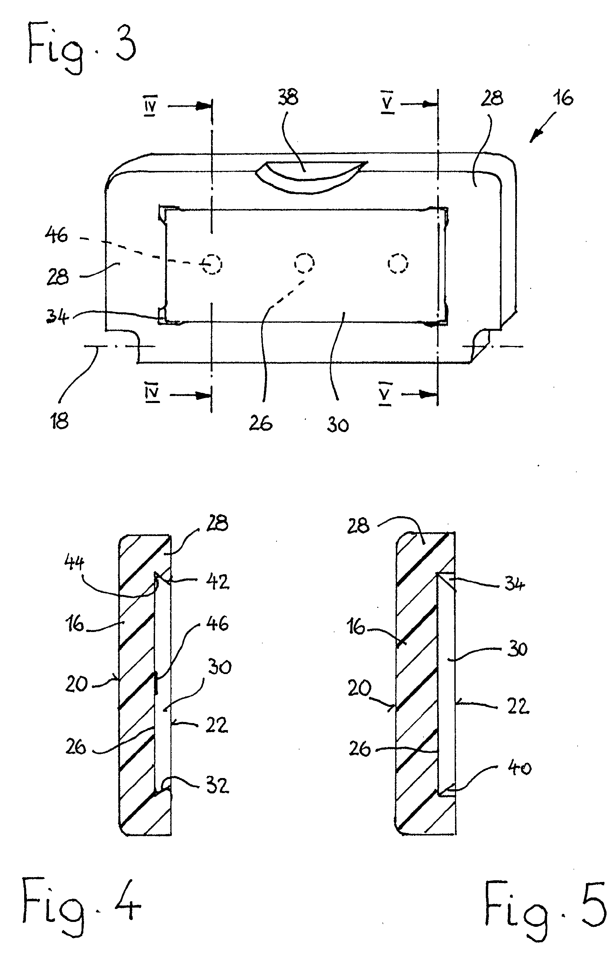

In den Figuren 1 und 2 ist die Rückenlehne 10 eines Flugzeugsitzes 12 angedeutet, an deren Rückseite 14 ein Klapptisch 16 gemäß der Erfindung angebracht ist. Der Klapptisch 16 ist in herkömmlicher Weise aus Kunststoff hergestellt, beispielsweise aus Polycarbonat tiefgezogen oder gespritzt, und beidseitig - wie in Figur 3 angedeutet - mit Scharnieren 18 ausgerüstet, über welche er um etwa 90° schwenkbar an der Rückenlehne 10 befestigt ist.

In der hochgeklappten Ruhestellung des Tisches 16 liegt die Nutzfläche 20 an der Rückseite 14 der Rückenlehne 10 an, während die zur Nutzfläche 20 parallel verlaufende Unterseite 22 als vertikale Fläche sichtbar ist. In dieser hochgeklappten Ruhestellung wird der Tisch 16 von einem Schwenkriegel 24 gehalten, der dabei in eine Vertiefung 38 des Tisches 16 eingreift (vgl. Figur 3).

In den größten Teil der Unterseite 22 des Klapptisches 14 ist eine rechteckige Aussparung 26 eingearbeitet, die an allen vier Seiten durch einen Rand 28 begrenzt wird. Die Aussparung 26 dient zur Aufnahme eines plattenförmigen, ebenfalls rechteckigen Einsatzes 30, der aus einem elastisch verformbaren, durchsichtigen Kunststoff hergestellt ist. Hierbei handelt es sich um einen schwer entflammbaren, splitterfreien Kunststoff, vorzugsweise Polycarbonat; aus diesem Kunststoff kann auch der Klapptisch 16 hergestellt sein, beispielsweise im Spritzgußverfahren.

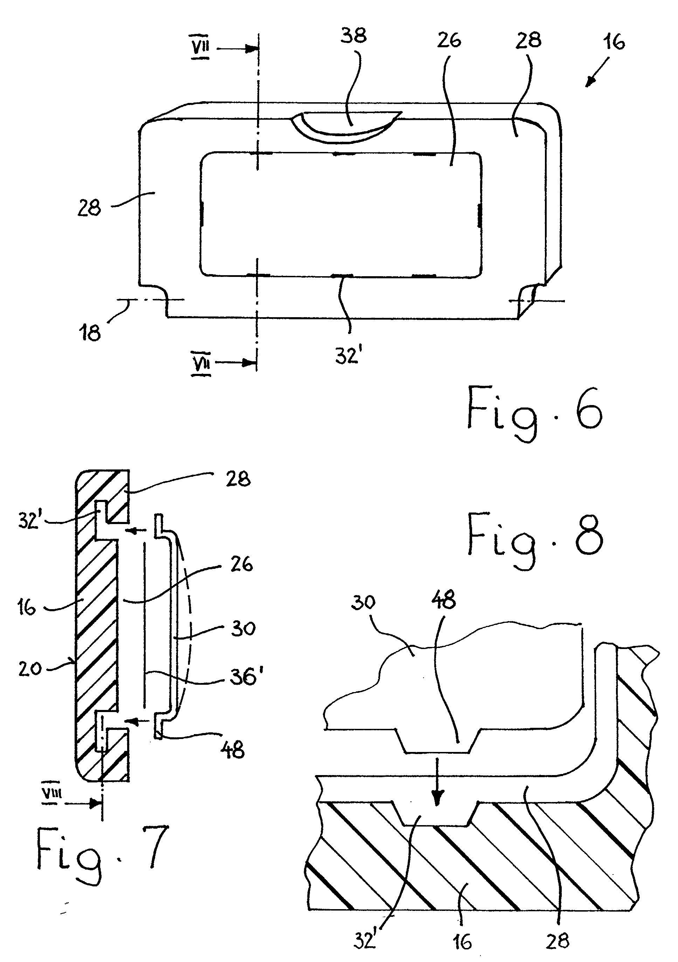

Der plattenförmige Einsatz 30 hat beispielsweise eine Stärke von 2 bis 3 mm. Diesem Maß entspricht die Tiefe der Aussparung 26, so daß bei eingelegtem Einsatz 30 dessen Außenfläche bündig mit den vier Rändern 28 des Klapptisches 16 abschließt (vgl. Figuren 4 und 5).

Die zueinander parallelen Ränder der Aussparung 26 bilden, wie Figur 4 zeigt, eine schwalbenschwanzförmige Hinterschneidung 32, die an den vier Ecken der Aussparung 26 in eine erweiterte Öffnung 34 übergeht (Figuren 3 und 5). Entsprechend den schwalbenschwanzförmigen Hinterschneidungen 32 sind alle vier Kanten 40 des Einsatzes 30 angefast, beispielsweise mit einem Fasenwinkel von 45°. In Figur 4 ist angedeutet, daß sowohl die Eintrittskanten 42 der Hinterschneidungen 32 als auch die Außenkanten 44 des Einsatzes 30 leicht abgerundet sind.

Der Einsatz 30 wird zunächst mit einer längs und einer quer verlaufenden Kante 40 unter die entsprechenden Hinterschneidungen 32 gelegt, worauf die beiden anderen Kanten 40 unter Druckausübung, beispielsweise einer Hand, in die übrigen Hinterschneidungen 32 eingeschnappt werden. Die abgerundeten Außenkanten 44 des Einsatzes 30 sowie die abgerundeten Eintrittskanten 42 der Hinterschneidungen 32 unterstützen hierbei den Eindrückvorgang.

Der Einsatz 30 sitzt nun formschlüssig fest in der Aussparung 26 und kann mit der bloßen Hand nicht herausgenommen werden. Zum Herausnehmen wird ein flaches Lösewerkzeug, z.B. eine starre, vorn geradlinig verlaufende Klinge, in eine der Öffnungen 34 eingeführt, so daß mit Hebelwirkung der Einsatz 30 an dieser Ecke aus seinem Sitz herausgestemmt werden kann. Sodann kann der Einsatz 30 mit den Fingern einer Hand erfaßt und aus den übrigen schalbenschwanzförmigen Hinterschneidungen 32 herausgezogen werden, um den Informationsträger 36 zu entfernen oder gegen einen anderen Informationsträger 36' oder Einsatz 30 auszutauschen.

Als zusätzliche Sicherung gegen unbefugtes Herausnehmen des Einsatzes können in der Aussparung 26 Klebepunkte 46 vorgesehen sein, die den Einsatz 30 lösbar fixieren.

Die nach innen weisende Fläche des durchsichtigen Einsatzes 30 kann mit einem Informationsträger 36 versehen sein, der beispielsweise über Siebdruck oder UV-Offsetdruck aufgebracht ist. Alternativ ist es auch möglich, den Informationsträger als Einlegeblatt 36' auszubilden (vgl. Figur 2), das zwischen den Einsatz 30 und die Aussparung 26 gelegt wird.

Bei der Variante der Figur 6 sind in die vier Randbereiche der Aussparung 26 schlitzförmige Nuten 32' eingearbeitet, die zur Aufnahme von entsprechend ausgebildeten, steifen Zungen 48 dienen, die von den Rändern des Einsatzes 30 abstehen.

Im Beispiel der Figuren 7 und 8 verlaufen die Zungen 48 parallel zur Hauptfläche des Einsatzes 30 und bilden zu dieser Hauptfläche jeweils eine Stufe. In entsprechender Weise bilden die Nuten 32' einen stufenförmig hinterschnittenen Sitz für den formschlüssigen Eingriff der Zungen 48. Um alle Zungen 48 gleichzeitig in die zugehörigen Nuten 32 einsetzen zu können, muß der Einsatz 30, wie in Figur 7 gestrichelt angedeutet, kurzzeitig in eine allseitig gewölbte Stellung verformt werden, wozu ein entsprechendes Saugwerkzeug an der Außenseite des Einsatzes 30 eingreift. Die Zungen 48 können dann in die hinterschnittenen Nuten 32' formschlüssig eingesetzt werden, wonach die elastische Verformung wieder aufgehoben wird. Der Einsatz 30 liegt nun sicher in der Aussparung 26, aus der er ohne Zuhilfenahme eines Werkzeugs nicht mehr herausgenommen werden kann.

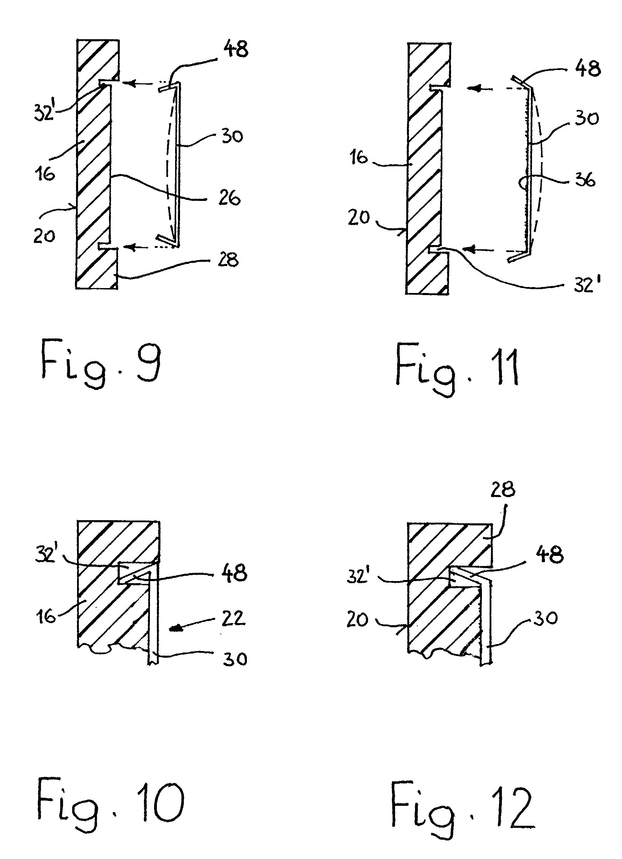

Die Varianten der Figuren 9 und 11 zeigen, daß die Zungen 48 mit der Hauptfläche des Einsatzes 30 einen spitzen Winkel (Figur 9) oder einen stumpfen Winkel (Figur 11) bilden können.

Um im Beispiel der Figur 9 die Zungen 48 an den gegenüberliegenden Rändern des Einsatzes 30 in eine etwa parallele Stellung zu bringen, die in Figur 9 gestrichelt eingezeichnet ist, wird der Einsatz 30 auch hier kurzzeitig in eine allseitig gewölbte Stellung verformt (gestrichelt eingezeichnet), wozu das Saugwerkzeug an der Außenseite des Einsatzes 30 angreift. Nachdem der Einsatz 30 in die Aussparung 26 eingelegt ist, wird die elastische Verformung wieder aufgehoben, so daß gemäß Figur 10 die Zungen 48 sowohl krafschlüssig als auch formschlüssig in den Nuten 32' liegen und der Einsatz 30 ohne ein Werkzeug nicht mehr herausgenommen werden kann.

Die Figuren 11 und 12 zeigen, daß zum Einbringen der Zungen 48 in die Nuten 32' hier der Einsatz 30 nicht konkav gewölbt wird, sondern in eine vorübergehende, allseitig konvexe Lage gebracht wird, wozu ebenfalls eine Saugglocke am Einsatz 30 angreift. Die Zungen 48 befinden sich dann in der gestrichelten Stellung, in der sie in die Nuten 32' eingesetzt werden können. Nachdem die Verformung des Einsatzes 30 wieder aufgehoben ist, liegen gemäß Figur 12 die Enden der Zungen 48 kraft- und formschlüssig an den Außenseiten der Nuten 32' an.

Wenn der Informationsträger 36 gewechselt werden soll, läßt sich der Einsatz 30 in der erläuterten Weise mit Hilfe des hierfür ausgebildeten Werkzeuges leicht wieder herausnehmen und gegen einen anderen Informationsträger 36' oder Einsatz 30 austauschen.

## Patentansprüche

1. Klapptisch mit einer Scharniereinrichtung (18) zur um etwa 90° schwenkbaren Befestigung an einem vertikalen Träger, insbesondere an der Rückseite (14) der Rückenlehne (10) eines Flugzeugsitzes (12) oder Fahrzeugsitzes, wobei der Klapptisch (16) die Form einer Platte mit in horizontaler Gebrauchsstellung nach oben weisender Nutzfläche (20) und parallel dazu verlaufender Unterseite (22) hat, welche in der hochgeklappten Ruhestellung des Tisches als vertikale Fläche sichtbar ist und eine Aussparung (26) zur Aufnahme eines plattenförmigen Einsatzes (30) für einen Informationsträger (36) aufweist, **dadurch gekennzeichnet, daß** der plattenförmige Einsatz (30) aus einem elastisch verformbaren, durchsichtigen Kunststoff besteht und mit wenigstens zwei gegenüberliegenden Rändern formund/oder kraftschlüssig in Sitze (32) an den gegenüberliegenden Rändern der Aussparung (26) herausnehmbar eingreift.

2. Klapptisch nach Anspruch 1, **dadurch gekennzeichnet, daß** der Informationsträger (36) auf die nach innen weisende Fläche des plattenförmigen Einsatzes (30) aufgedruckt ist.

3. Klapptisch nach Anspruch, 1 **dadurch gekennzeichnet, daß** der Informationsträger (36') aus einem Einlegeblatt besteht.

4. Klapptisch nach einem der vorhergehenden Ansprüche, **dadurch gekennzeichnet, daß** der plattenförmige Einsatz (30) rechteckig ausgebildet ist und in seiner in die an allen vier Seiten von einem Rand (28) begrenzte Aussparung (26) eingesetzten Stellung bündig mit den Rändern (28) abschließt.

5. Klapptisch nach einem der vorhergehenden Ansprüche, daß die Ränder des plattenförmigen Einsatzes (30) aus angefasten Kanten bestehen und daß die Sitze (32) an den Rändern der Aussparung (26) aus schwalbenschwanzförmigen Hinterschneidungen bestehen, in die die angefasten Kanten des Einsatzes (30) formschlüssig eingedrückt sind.

6. Klapptisch nach Anspruch 5, **dadurch gekennzeichnet, daß** sich an wenigstens einer Ecke der Aussparung (26) an die schwalbenschwanzförmige Hinterschneidung (32) eine die Kante des plattenförmigen Einsatzes (30) freigebende Öffnung (34) zum Einführen eines flachen Lösewerkzeugs anschließt.

7. Klapptisch nach Anspruch 5 oder 6, **dadurch gekennzeichnet, daß** die Aussparung (26) und der plattenförmige Einsatz (30) rechteckig ausgebildet sind, wobei alle vier Kanten des Einsatzes (30) angefast sind.

8. Klapptisch nach einem der Ansprüche 5 bis 7, **dadurch gekennzeichnet, daß** die Eintrittskanten (42) der Hinterschneidungen (32) und/oder die Außenkanten (44) des Einsatzes (30) abgerundet sind.

9. Klapptisch nach einem der Ansprüche 1 bis 4, **dadurch gekennzeichnet, daß** von wenigstens zwei gegenüberliegenden Rändern des Einsatzes (30) steife Zungen (48) abstehen, die form- und/oder kraftschlüssig in die als Nuten (32') ausgebildeten Sitze (32) der Aussparung (26) eingreifen.

10. Klapptisch nach Anspruch 9, **dadurch gekennzeichnet, daß** die Zungen (48) parallel zur Hauptfläche des Einsatzes (30) verlaufen, wobei die Nuten (32') einen stufenförmig hinterschnittenen Sitz für den formschlüssigen Eingriff der Zungen (48) bilden.

11. Klapptisch nach Anspruch 9, **dadurch gekennzeichnet, daß** die Zungen (48) mit der Hauptfläche des Einsatzes (30) einen spitzen Winkel bilden.

12. Klapptisch nach Anspruch 9, **dadurch gekennzeichnet, daß** die Zungen (48) mit der Hauptfläche des Einsatzes (30) einen stumpfen Winkel bilden.

13. Klapptisch nach einem der vorhergehenden Ansprüche, **dadurch gekennzeichnet, daß** in der Aussparung (26) Klebepunkte (46) zur lösbaren Fixierung des Einsatzes (30) angebracht sind.

14. Klapptisch nach einem der vorhergehenden Ansprüche, **dadurch gekennzeichnet, daß** die Tischplatte (16) und/oder der Einsatz (30) aus einem schwer entflammbaren, splitterfreien Kunststoff besteht, vorzugsweise Polycarbonat.
